# EUROPEAN PATENT SPECIFICATION

(11) **EP 2 339 785 B1**
(45) Date of publication and mention of the grant of the patent: **05.06.2013**
(21) Application number: 09814073.4
(22) Date of filing: 18.09.2009
(51) Int. Cl.: H04W 76/02

(54) **METHOD, APPARATUS AND SYSTEM FOR PROCESSING SERVICE REQUEST**
VERFAHREN, VORRICHTUNG UND SYSTEM ZUM VERARBEITEN VON DIENSTANFORDERUNGEN
PROCÉDÉ, DISPOSITIF ET SYSTÈME DE TRAITEMENT DE DEMANDE DE SERVICE

(30) Priority: 18.09.2008 CN 200810222523; 28.09.2008 CN 200810167138
(43) Date of publication of application: 29.06.2011
(73) Proprietor: Huawei Technologies Co., Ltd., Longgang District, Shenzhen Guangdong 518129 (CN)
(72) Inventor: DI, Zhiyu c/o Huawei Technologies Co.Ltd., Int.Prop.Dept., Shenzhen (CN); YIN, Yu c/o Huawei Technologies Co.Ltd., Int.Prop.Dept., Shenzhen (CN); WANG, Shanshan c/o Huawei Technologies Co.Ltd., Int.Prop.Dept., Shenzhen (CN); QI, Caixia c/o Huawei Technologies Co.Ltd., Int.Prop.Dept., Shenzhen (CN); ZHU, Fenqin c/o Huawei Technologies Co.Ltd., Int.Prop.Dept., Shenzhen (CN)
(74) Representative: Körber, Martin Hans
(86) International application number: PCT/CN2009/074039
(87) International publication number: WO 2010/031353

(56) References cited:
- EP-A2- 1 921 811
- CN-A- 1 996 913
- US-A1- 2002 089 949
- US-A1- 2004 017 798

## Description

### FIELD OF THE INVENTION

The present invention relates to communication technologies, and in particular, to a method, an apparatus, and a system for processing service requests.

### BACKGROUND OF THE INVENTION

When the network evolves toward broadband and mobility, the 3rd Generation Partnership Project (3GPP) organization puts forward a Long Term Evolution (LTE) solution, namely, Evolved Universal Mobile Telecommunication System Territorial Radio Access Network (E-UTRAN) with respect to the mobile access network, and puts forward a System Architecture Evolution (SAE) solution, namely, Evolved Packet Core (EPC) with respect to the mobile core network.

In UMTS Territorial Radio Access Network (UTRAN) network, the User Equipment (UE) location management may be implemented through service area (registered area), Location Area (LA), and Routing Area (RA). In an E-UTRAN network, without difference between the Circuit Switched (CS) domain and the Packet Switched (PS) domain, the UE location management may be implemented through a Tracking Area (TA) uniformly. An identifier is allocated to each UE, and location management is performed for the idle UE.

The Internet Protocol (IP)-based 3GPP service is provided through different access technologies. Therefore, the SAE needs to support different access systems. That is, the SAE needs to be a seamless evolution from the traditional General Packet Radio Service (GPRS) network, and needs to be interconnected with non-3GPP access systems. The basic architecture of the SAE network (namely, EPC) includes mobility management devices such as Mobility Management Entity (MME) and Serving GPRS Support Node (SGSN), Serving Gateway (SGW), Packet Data Network Gateway (PGW), and access network devices such as evolved Node B (eNB), Radio Network Controller (RNC), and Base Station Controller (BSC).

If an idle UE needs to send uplink data or signaling, the UE triggers a service request procedure to set up air interface-side signaling connection and bearer. After the network receives the downlink data or signaling destined for the idle UE, the network may trigger a service request procedure to set up air interface-side signaling connection and bearer.

After the UE that accesses the EPC through an E-UTRAN is registered under the MME, the MME allocates a set of location area (namely, a set of TAs) to the UE according to the identifier of the current location area of the UE (the identifier is a TAI reported from the air interface side). The set of TAs may be a TA list. After the UE changes to the idle state, the UE will not initiate the Tracking Area Update (TAU) procedure if the UE moves within the areas corresponding to the TA list. The service area of the SGW is a set of TAs. When the UE moves in the service area of the SGW, the SGW that serves the UE can be connected to the user plane of any eNB within the service area of the SGW without changing the SGW in any way.

The prior art has the following disadvantages: The location area (such as TA) of the UE corresponding to the location area list (such as TA list) in the prior art is independent of the service area of the SGW Consequently, the location area (TA) in the location area list (TA list) allocated by the mobility management device (MME or SGSN) to the UE does not fully fall within the service area of the selected SGW. If the location area (TA) in the location area list (TA list) allocated by the MME to the UE does not fully fall within the service area of the SGW, the user-plane connection may disappear between the access network device (eNB) and the selected SGW When an idle UE moves to a location area (TA) in a location area list (TA list), if the access network device (eNB) that serves the location area (TA) has no user-plane connection with the selected SGW, the user sends a service request through the UE, or the network receives a downlink packet which triggers the UE to send a service request, the user is unable to set up a user-plane connection with the selected SGW through the access network device (eNB) connected to the UE, which frustrates the uplink and downlink services of the UE.

US2004/017798 discloses a system and method for providing a connection in a communication network which comprises several network elements and is adapted to route a connection via a first network element such as a radio network controller and one or more of alternatively selectable second network elements such as serving nodes. The network comprises a network element which stores a list of selectable second network elements. The list is accessed using an identifier identifying a routing or location area or a desired second network element. The list can be stored in a DNS server which returns to an inquiring network element such as a radio network controller, e.g. IP addresses or serving nodes capable of serving a routing or location area of a connection originating or terminating network element. The connection originating or terminating network element may also be adapted to send an identifier identifying a specific network element such as an SGSN to which it desires to be connected.

### SUMMARY OF THE INVENTION

The present invention provides a method, an apparatus, and a system for processing service requests, and the present invention enables that the uplink and downlink services requested by the UE can be normally implemented when the UE sends a service request through an access network device which has no user-plane connection with the currently selected SGW.

According to the first aspect of the present invention a method for processing a service request includes:
receiving, by a mobility management device, a service request sent by User Equipment, UE, through an access network device;
determining, by the mobility management device, whether a user-plane connection exists between the access network device and a first Serving Gateway, SGW, wherein the first SGW is a preselected SGW corresponding to the UE;
selecting, by the mobility management device, a second SGW if determining that no user-plane connection exists between an access network device and a first SGW after receiving a service request sent by a UE through the access network device, where the first SGW is a preselected SGW corresponding to the UE, and the second SGW has a user-plane connection with the access network device; and
setting up, by the mobility management device, a bearer on the second SGW.

According to the second aspect of the present invention an apparatus for processing a service request includes
a judging module, adapted to judge whether a user-plane connection exists between an access network device and a first SGW after receiving a service request sent by a UE through the access network device, where the first SGW is a preselected SGW corresponding to the UE;
a selecting module, adapted to select a second SGW if the judging module determines that no user-plane connection exists between the access network device and the first SGW, where the second SGW has a user-plane connection with the access network device; and
a bearer module, adapted to set up a bearer on the second SGW.

According to the third aspect of the present invention a system for processing a service request includes an access network device, SGWs, and a mobility management device. The SGWs include a first SGW and a second SGW. The first SGW is a preselected SGW corresponding to the UE connected to the access network device; the second SGW has a user-plane connection with the access network device; the mobility management device is adapted to select a second SGW if determining that no user-plane connection exists between the access network device and the first SGW after receiving the service request sent by the UE through the access network device, and set up a bearer on the second SGW.

The foregoing technical solution reveals that: The mobility management device judges whether a user-plane connection exists between the access network device and the currently selected first SGW according to a preset policy after the access network device receives a service request sent by a UE; after determining that no user-plane connection exists between the access network device and the first SGW, the mobility management device selects a second SGW which has a user-plane connection with the access network device, and sets up a UE service bearer on the second SGW, thus ensuring normal implementation of the uplink and downlink services requested by the UE.

### BRIEF DESCRIPTION OF THE DRAWINGS

To illustrate the technical solution under the present invention or the prior art more clearly, the following outlines the accompanying drawings involved in description of the embodiments of the present invention or the prior art. Apparently, the accompanying drawings outlined below are illustrative rather than exhaustive.
FIG. 1 is a flowchart of a service request processing method according to the first embodiment of the present invention;
FIG. 2 is a flowchart of a service request processing method according to the second embodiment of the present invention;
FIG. 3 is a flowchart of a service request processing method according to the third embodiment of the present invention;
FIG. 4 is a flowchart of a service request processing method according to the fourth embodiment of the present invention;
FIG. 5 is a flowchart of a service request processing method according to the fifth embodiment of the present invention;
FIG. 6 is a flowchart of a service request processing method according to the sixth embodiment of the present invention;
FIG. 7 shows a structure of a service request processing apparatus according to the seventh embodiment of the present invention; and
FIG. 8 shows a structure of a service request processing apparatus according to the eighth embodiment of the present invention.

### DETAILED DESCRIPTION OF THE EMBODIMENTS

The following detailed description is given in conjunction with the accompanying drawings in order to provide a thorough understanding of the present invention. Evidently, the drawings and the detailed description are merely representative of particular embodiments of the present invention, and the embodiments are illustrative in nature rather than exhaustive.

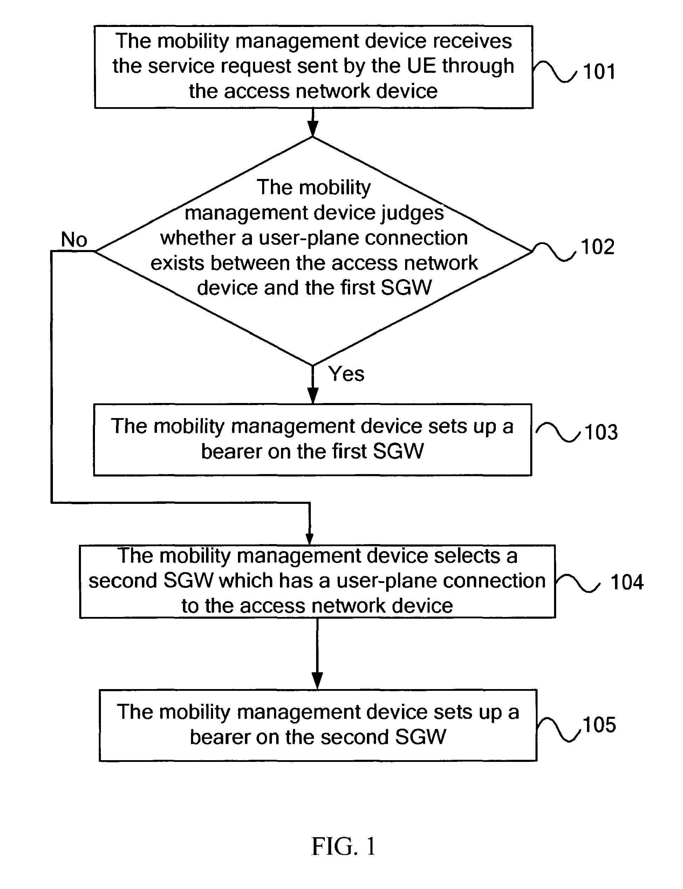

FIG. 1 is a flowchart of a service request processing method provided in the first embodiment of the present invention. As shown in FIG. 1, the method in this embodiment includes the following steps:
Step 101: Through an access network device, the mobility management device receives a service request sent by the UE. The service request may carry the identifier of the UE.
Step 102: The mobility management device judges whether a user-plane connection exists between the access network device and the preselected first SGW corresponding to the UE. If so, the procedure proceeds to step 103; if not, the procedure proceeds to step 104 and step 105.
Step 103: The mobility management device sets up a bearer on the first SGW.
Step 104: The mobility management device selects a second SGW which has a user-plane connection with the access network device.
Step 105: The mobility management device sets up a bearer on the second SGW.

In this embodiment, the access network device may be an eNB, RNC, or BSC; and the mobility management device may be an MME or SGSN. This embodiment is applicable to the scenario of accessing the EPC through any Radio Access Network (RAN). When the RAN is an LTE network, namely, E-UTRAN, the access network device is an eNB, and the mobility management device is an MME; when the RAN is a 3G network such as UTRAN, the access network device is an RNC, and the mobility management device is an SGSN; when the RAN is a 2G network such as GSM/EDGE Radio Access Network (GERAN), the access network device is a BSC, and the mobility management device is an SGSN.

The service request processing method provided in this embodiment may be initiated by the UE, namely, the UE sends a service request to the mobility management device through the access network device proactively, thus setting up an air interface-side signaling connection and bearer; or, the service request processing method is triggered by the UE passively according to the network-side paging. That is, after the mobility management device receives a downlink data notification message sent by the first SGW, the access network device puts paging through to the corresponding UE, which triggers the UE to send a service request to the mobility management device passively through the access network device. The paging from the network to the UE triggers the UE to send a service request passively to set up an air interface-side signaling connection and bearer.

In this embodiment, the UE sets up a bearer of the packet service requested by the UE on the SGW (either the first SGW or the second SGW), and the bearer may be made up of the access bearer between the UE and the SGW (either the first SGW or the second SGW), and the tunnel bearer between the SGW (either the first SGW or the second SGW) and the PGW The access bearers include the tunnel bearer between the access network device and the SGW (either the first SGW or the second SGW), and the radio bearer between the access network device and the UE. A packet service is in a one-to-one mapping relation to the foregoing bearers.

In this embodiment, the mobility management device judges whether a user-plane connection exists between the access network device and the currently selected first SGW according to a preset policy after the access network device receives a service request sent by the UE proactively or passively; after determining that no user-plane connection exists between the access network device and the first SGW, the mobility management device selects a second SGW which has a user-plane connection with the access network device, and sets up a UE service bearer on the second SGW, thus ensuring normal implementation of the uplink and downlink services requested by the UE.

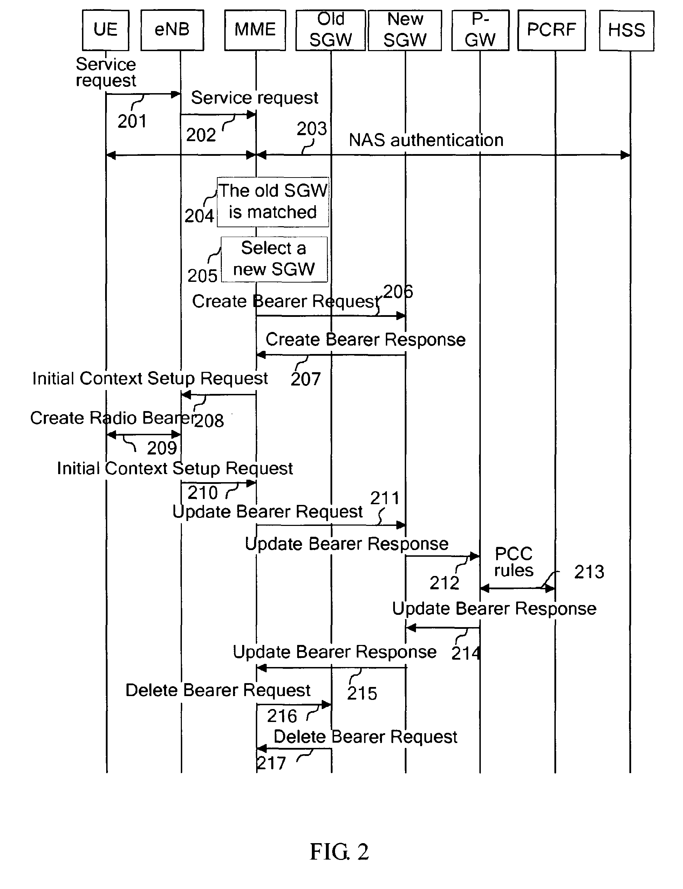

The service request processing method provided in the second embodiment of the present invention is applicable to a scenario of accessing the EPC through an E-UTRAN, in which the UE sends a service request to the MME proactively through an eNB. FIG. 2 is a flowchart of a service request processing method provided in the second embodiment of the present invention. As shown in FIG. 2, the method in this embodiment includes the following steps:
Step 201: The UE sends a service request that carries the identifier of the UE to the eNB.
Step 202: The eNB receives the service request and forwards it to the MME.
Step 203: The MME interacts with the UE and a Home Subscriber Server (HSS) to perform Non Access Stratum (NAS) authentication for the UE.

This step is optional, and is performed only if NAS authentication is required.

Step 204: The MME receives the service request, and finds the preselected first SGW (old SGW) according to the identifier of the UE which corresponds to the UE.

Step 205: The MME determines that no user-plane connection exists between the eNB and the old SGW, namely, the old SGW is not able to serve the UE any longer. Therefore, the MME selects a second SGW (new SGW) which has a user-plane connection with the eNB.

In this step, the MME may judge whether the old SGW can go on serving the UE according to the TAI of the current TA of the UE in one of the following three methods:
Method A: The MME searches the Domain Name System (DNS) according to the TAI of the current TA of the UE to obtain the identifiers of all SGWs corresponding to the TA. The MME checks whether the obtained identifiers include the identifier of the old SGW The obtained identifiers of all SGWs that can serve the UE in the current TA of the UE may be a list of addresses of all SGWs, or a list of names of all SGWs. If any of such identifiers is the same as the identifier of the old SGW, it indicates that the old SGW can go on serving the UE; otherwise, it indicates that the old SGW is not able to serve the UE any longer.
Method B: The MME searches the DNS according to the identifier of the old SGW to obtain identifiers of all TAs corresponding to the old SGW, and stores the obtained identifiers of all TAs. The MME checks whether the pre-stored identifiers of all TAs corresponding to the old SGW include the identifier of the current TA of the UE. The obtained and stored identifiers of all TAs that can be served by the old SGW may be a list of all TAIs. If any of such identifiers is the same as the identifier of the current TA of the UE, it indicates that the old SGW can go on serving the UE; otherwise, it indicates that the old SGW is not able to serve the UE any longer.
Method C: The MME searches the DNS according to the identifier of the old SGW to obtain identifiers of all TAs corresponding to the old SGW The MME checks whether the obtained identifiers of all TAs corresponding to the old SGW include the identifier of the current TA of the UE. The obtained identifiers of all TAs that can be served by the old SGW may be a list of all TAIs. If any of such identifiers is the same as the identifier of the current TA of the UE, it indicates that the old SGW can go on serving the UE; otherwise, it indicates that the old SGW is not able to serve the UE any longer.

Further, in this step, the MME may judge whether the old SGW can go on serving the UE according to the identifier of the eNB currently connected to the UE in one of the following three methods:
Method A': The MME searches the DNS according to the identifier of the eNB to obtain identifiers of all SGWs corresponding to this eNB. The MME checks whether the obtained identifiers of all SGWs include the identifier of the old SGW The obtained identifiers of all SGWs that can serve the eNB may be a list of addresses of all SGWs, or a list of names of all SGWs. If any of such identifiers is the same as the identifier of the old SGW, it indicates that the old SGW can go on serving the UE; otherwise, it indicates that the old SGW is not able to serve the UE any longer.
Method B': The MME searches the DNS according to the identifier of the old SGW to obtain identifiers of all eNB's corresponding to the old SGW, and stores the obtained identifiers of all eNB's. The MME checks whether the pre-stored identifiers of all eNB's corresponding to the old SGW include the identifier of the eNB currently connected to the UE. The obtained and stored identifiers of all eNB's that can be served by the old SGW may be a list of identifiers of all eNB's. If any of such identifiers is the same as the identifier of the eNB currently connected to the UE, it indicates that the old SGW can go on serving the UE; otherwise, it indicates that the old SGW is not able to serve the UE any longer.
Method C': The MME searches the DNS according to the identifier of the old SGW to obtain identifiers of all eNB's corresponding to the old SGW. The MME checks whether the obtained identifiers of all eNB's corresponding to the old SGW include the identifier of the eNB currently connected to the UE. The obtained identifiers of all eNB's that can be served by the old SGW may be a list of identifiers of all eNB's. If any of such identifiers is the same as the identifier of the eNB currently connected to the UE, it indicates that the old SGW can go on serving the UE; otherwise, it indicates that the old SGW is not able to serve the UE any longer.

In this step, the MME may select an SGW corresponding to an identifier among all SGW identifiers obtained through method A or method A', and use the selected SGW as the new SGW

Step 206: The MME sends a Create Bearer Request to the new SGW, and creates a bearer context of the user on the new SGW

Step 207: The new SGW receives the Create Bearer Request, and returns a Create Bearer Response to the MME.

Step 208: The MME sends an Initial Context Setup Request Create Bearer Request of S1-AP layer to the eNB to recover all radio bearers over the activated Evolved Packet System (EPS).

Step 209: The eNB receives the Initial Context Setup Request Create Bearer Request, and interacts with the UE to create a radio bearer between the eNB and the UE. That is, the eNB sends a Create Radio Bearer Request to the UE, and the UE sends a Radio Bearer Setup Complete message to the eNB.

Now, the access bearer between the UE and the new SGW is set up, and the UE can send uplink service packets to the PGW through the new SGW.

Step 210: The eNB sends an Initial Context Setup Complete message of S1-AP layer to the MME, where the message carries an address of the eNB and a Tunnel Endpoint Identifier (TEID) allocated by the eNB.

Step 211: The MME receives the Initial Context Setup Complete message, and sends an Update Bearer Request message to the new SGW, where the message carries the address of the eNB and the TEID.

Step 212: The new SGW receives the Update Bearer Request message, and sends another Update Bearer Request message to the PGW, where the other Update Bearer Request message carries the address of the new SGW and the TEID allocated by the new SGW.

Step 213: The PGW receives the Update Bearer Request message. A Policy and Charging Enforcement Function (PCEF) interacts with a Policy and Charging Rules Function (PCRF) in the PGW to trigger processing of Policy Control and Charging (PCC) rules.

The PGW receives the Update Bearer Request message. Now, the tunnel bearer between the new SGW and the PGW is set up, and the PGW can send downlink service packets to the UE through the new SGW

This step of interaction is optional and is performed only if the dynamic PCC architecture is configured. When this step is performed, the PCEF reports the current access mode to the PCRF, namely, initiates an IP-Connectivity Access Network (IP-CAN) session modification procedure.

Step 214: The PGW returns an Update Bearer Response message to the new SGW.

Step 215: The new SGW receives the Update Bearer Response message, and sends another Update Bearer Response message to the MME.

Step 216: The MME receives the Update Bearer Response message, and sends a Delete Bearer Request message to the old SGW.

Step 217: The old SGW receives the Delete Bearer Request message, deletes the bearer context on the old SGW, and returns a Delete Bearer Response message to the MME to confirm deletion of the bearer context.

Alternatively, step 212, step 123, and step 214 in this embodiment may occur sequentially between step 206 and step 207.

In this embodiment, through the eNB, the MME receives the service request sent by the UE proactively, and then judges whether a user-plane connection exists between the eNB and the currently selected SGW according to a preset policy; if determining that no user-plane connection exists, the MME selects a new SGW which has a user-plane connection with the eNB, and sets up a UE service bearer on the new SGW, thus ensuring normal implementation of uplink and downlink services requested by the UE.

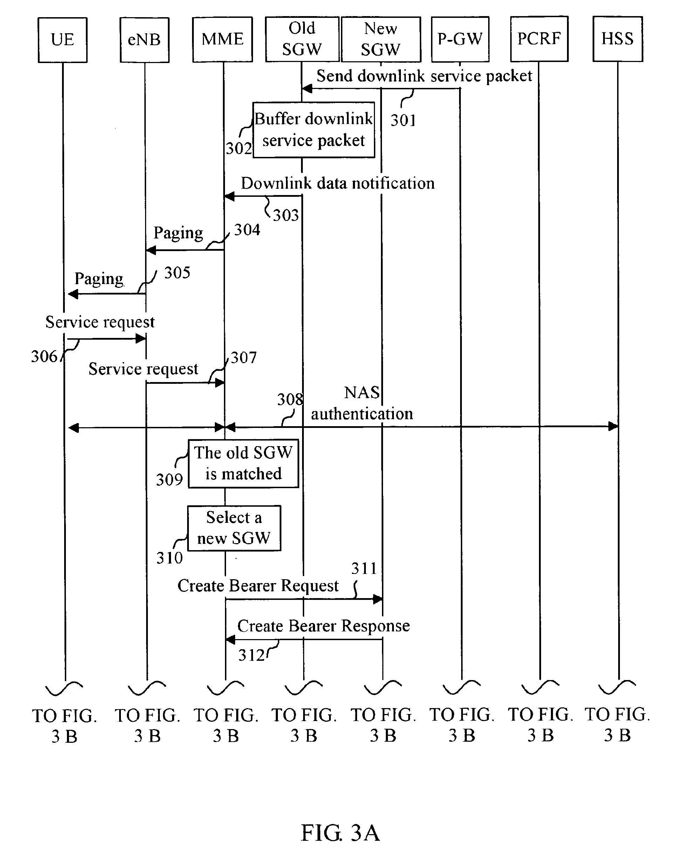

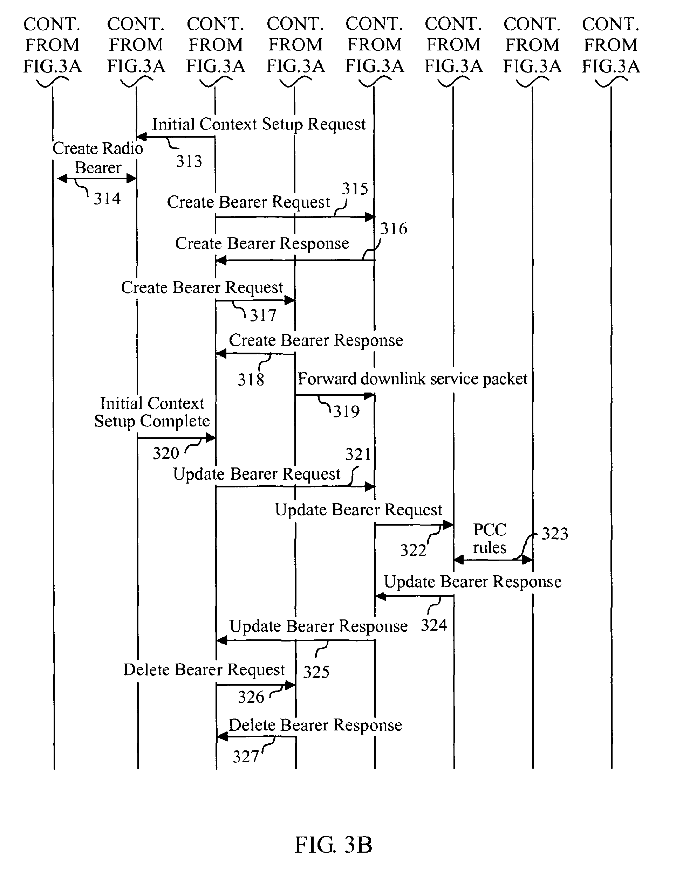

The service request processing method provided in the third embodiment of the present invention is applicable to a scenario of accessing the EPC through an E-UTRAN, in which the idle UE sends a service request to the MME passively through the eNB as triggered by the network, namely, after being paged by the network through the eNB. FIG. 3 is a flowchart of a service request processing method provided in the third embodiment of the present invention. As shown in FIG. 3, the method in this embodiment includes the following steps:
Step 301: The PGW sends a downlink service packet to the old SGW
Step 302: The old SGW receives the downlink service packet, but obtains no information about the downlink tunnel corresponding to the downlink service packet. Therefore, the old SGW buffers the downlink service packet.
Step 303: The old SGW sends a downlink data notification message to the MME.
Step 304: The MME receives the downlink data notification message, and sends a Paging message to the eNB.
Step 305: The eNB receives the Paging message and forwards it to the corresponding idle UE.

Now, the idle UE is triggered to send a service request to the MME passively through the eNB.

Step 306: The UE sends a Service Request that carries the identifier of the UE to the eNB.

Step 307: The eNB receives the Service Request and forwards it to the MME.

Step 308: The MME interacts with the UE and the HSS, and performs NAS authentication for the UE.

This step is optional, and is performed only if NAS authentication is required.

Step 309: The MME receives the service request, and finds the preselected first SGW (old SGW) which matches the identifier of the UE and corresponds to the UE.

Step 310: The MME determines that no user-plane connection exists between the eNB and the old SGW, namely, the old SGW is not able to serve the UE any longer. Therefore, the MME selects a second SGW (new SGW) which has a user-plane connection with the eNB.

In this step, the MME may judge whether the old SGW can go on serving the UE according to the TAI of the current TA of the UE. The judgment method is the same as that detailed in the previous embodiment.

Step 311: The MME sends a Create Bearer Request to the new SGW, and creates a bearer context of the user on the new SGW.

Step 312: The new SGW receives the Create Bearer Request, and returns a Create Bearer Response to the MME.

Step 313: The MME sends an Initial Context Setup Request Create Bearer Request of S1-AP layer to the eNB to recover all radio bearers over the activated EPS.

Step 314: The eNB receives the Initial Context Setup Request Create Bearer Request, and interacts with the UE to create a radio bearer between the eNB and the UE. That is, the eNB sends a Create Radio Bearer Request to the UE, and the UE sends a Radio Bearer Setup Complete message to the eNB.

Step 315: The MME confirms receiving of the downlink data notification message, and sends a Create Bearer Request message to the new SGW and creates the forwarding-related parameter information in the new SGW.

Step 316: The new SGW receives the Create Bearer Request message, and returns a Create Bearer Response message to the MME, where the message carries the destination address allocated by the new SGW for data forwarding and the TEID allocated by the new SGW.

Step 317: The MME receives the Create Bearer Response message, and sends a Create Bearer Request message to the old SGW. The Create Bearer Response message carries the destination address allocated by the new SGW for data forwarding and the TEID allocated by the new SGW.

The MME interacts with the old S-GW to construct a data forwarding channel between the new SGW and the old SGW, notifies the address allocated by the new SGW for data forwarding and the TEID to the old SGW, and instructs the old SGW to start data forwarding.

Step 318: The old SGW receives the Create Bearer Request message, and returns a Create Bearer Response message to the MME, indicating that the old SGW has received the information about the tunnel and is ready for forwarding data to the new SGW.

Now, the data forwarding tunnel between the old SGW and the new SGW is set up, and the old SGW starts forwarding the buffered downlink service packets to the new SGW.

Step 319: The old SGW forwards the buffered downlink service packets to the new SGW.

Step 320: The eNB sends an Initial Context Setup Complete message of S1-AP layer to the MME, where the message carries an address of the eNB and a TEID allocated by the eNB.

Step 321: The MME receives the Initial Context Setup Complete message, and sends an Update Bearer Request message to the new SGW, where the message carries an address of the eNB and the TEID allocated by the eNB.

Step 322: The new SGW receives the Update Bearer Request message, and sends another Update Bearer Request message to the PGW, where the other Update Bearer Request message carries the address of the new SGW and the TEID allocated by the new SGW

Step 323: The PGW receives the Update Bearer Request message. A PCEF interacts with a PCRF in the PGW to trigger processing of PCC rules.

The PGW receives the Update Bearer Request message. Now, the tunnel bearer between the new SGW and the PGW is set up, and the PGW can send downlink service packets to the UE through the new SGW

This step of interaction is optional and is performed only if the dynamic PCC architecture is configured. When this step is performed, the PCEF reports the current access mode to the PCRF, namely, initiates an IP-CAN session modification procedure.

Step 324: The PGW receives the Update Bearer Request message, and returns an Update Bearer Response message to the SGW

Step 325: The new SGW receives the Update Bearer Response message, and forwards the Update Bearer Response message to the MME.

Step 326: The MME receives the Update Bearer Response message, and sends a Delete Bearer Request message to the old SGW

Step 327: The old SGW receives the Delete Bearer Request message, deletes the bearer context on the old SGW, and returns a Delete Bearer Response message to the MME to confirm deletion of the bearer context.

Alternatively, step 322, step 323, and step 324 in this embodiment may occur sequentially between step 311 and step 312.

Alternatively, step 311 and step 312 may be combined with step 315 and step 316.

In this embodiment, through a service request mechanism initiated by a special UE, the problem of lacking a user-plane connection between the eNB connected to the UE and the current SGW when the UE initiates a service request procedure passively is solved, and the failure of uplink and downlink services of the UE is avoided.

Further, the UE in this embodiment may be a UE based on an Idle mode Signaling Reduction (ISR) mechanism. The ISR mechanism complies with the following principles:
The UE is registered onto the MME and SGSN respectively; the MME allocates a TA list to the UE; and the SGSN stores the Routing Area Identifier (RAI) of the routing area in which the UE is currently located. No TAU procedure or Routing Area Update (RAU) procedure will be initiated only if the idle UE moves within the area corresponding to this TA list and the area corresponding to the RAI.

The MME and the SGSN are registered onto the HSS, and the HSS maintains the dual-PS domain network registration.

The SGSN and the MME need to notify the UE whether to use the ISR function.

If the 2G or 3G uses the ISR function, the idle user plane is terminated at the SGW.

The use of the ISR function on the UE needs to be notified to the SGW.

Further, the Create Initial Context Setup Request message sent by the MME to the eNB in step 207 in the second embodiment and the Create Radio Bearer Request message sent by the eNB to the UE in step 208 carry a deactivation identifier indicating that the ISR mechanism is deactivated on the UE. It is the same with the message in the third embodiment. Besides, after the old SGW deletes the carried context in the second embodiment and the third embodiment, the old SGW may trigger the SGSN to delete the bearer context on the SGSN. More specifically, the old SGW judges whether the ISR mechanism is enabled on the UE; if the ISR mechanism is enabled on the UE, the old SGW triggers the SGSN to delete the bearer context on the SGSN.

The idle UE in this embodiment sends a service request to the MME passively through the eNB as triggered by the downlink data sent by the network, namely, after being paged by the network through the eNB. Further, the idle UE in this embodiment may also send a service request to the MME passively through the eNB as triggered by the downlink signaling sent by the network, namely, after being paged by the network through the eNB. In this case, the network has no downlink data for forwarding.

Alternatively, the service request processing method provided in this embodiment is also applicable to other scenarios in which the UE accesses the EPC through the UTRAN or GERAN. In such scenarios, the access network device is an RNC or BSC instead; the mobility management device is an SGSN instead, and the detailed procedure is the same as the procedure described in the second embodiment and the third embodiment above except that: The SGSN judges whether the selected old SGW can go on serving the UE according to the RAI of the RA currently covering the UE or the identifier of the RNC/BSC currently connected to the UE. By contrast, in the second embodiment and the third embodiment, the MME judges whether the old SGW can go on serving the UE according to the TAI of the TA currently covering the UE or the identifier of the eNB currently connected to the UE, the principles of which are still applicable here. Also in such scenarios, after the old SGW deletes the carried context, the old SGW may trigger the MME to delete the bearer context on the MME. More specifically, the old SGW judges whether the ISR mechanism is enabled on the UE; if the ISR mechanism is enabled on the UE, the old SGW triggers the MME to delete the bearer context on the MME.

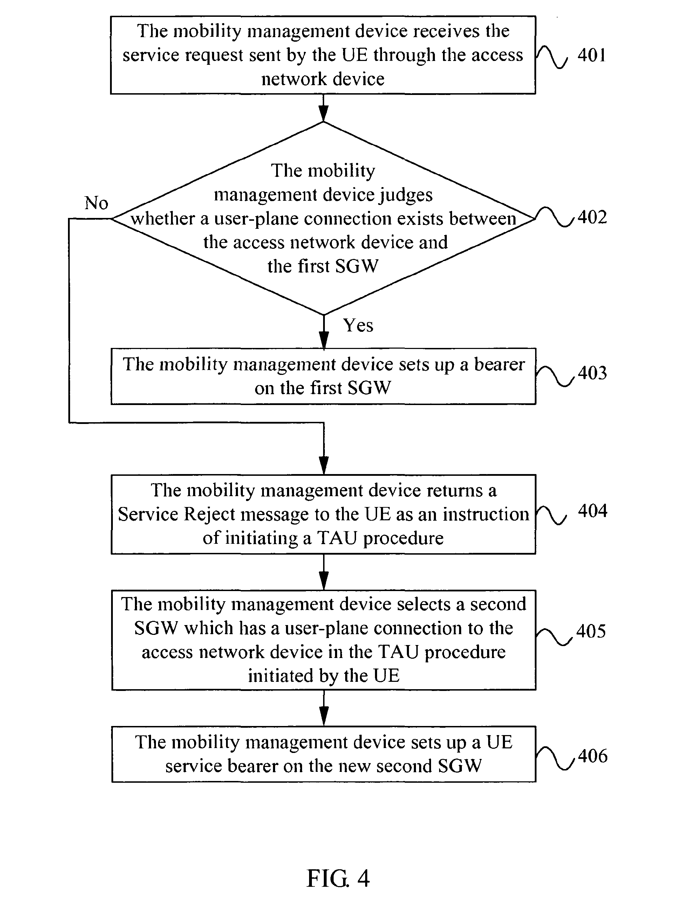

FIG. 4 is a flowchart of a service request processing method provided in the fourth embodiment of the present invention. As shown in FIG. 4, the method in this embodiment includes the following steps:
Step 401: Through an access network device, the mobility management device receives a service request sent by the UE. The service request may carry the identifier of the UE.
Step 402: The mobility management device judges whether a user-plane connection exists between the access network device and the preselected first SGW corresponding to the UE. If so, the procedure proceeds to step 403; if not, the procedure proceeds to step 404 and step 405.
Step 403: The mobility management device sets up a bearer on the first SGW
Step 404: The mobility management device returns a Service Reject message to the UE as an instruction of initiating a TAU procedure and recovering the radio bearer on the air interface side. The Service Reject message carries a cause value.
Step 405: The mobility management device selects a second SGW which has a user-plane connection with the access network device in the TAU procedure initiated by the UE.
Step 406: The mobility management device sets up a UE service bearer on the new second SGW.

In this embodiment, the access network device may be an eNB, RNC, or BSC; and the mobility management device may be an MME or SGSN. This embodiment is applicable to the scenario of accessing the EPC through any RAN. When the RAN is an LTE network, namely, E-UTRAN, the access network device is an eNB, and the mobility management device is an MME; when the RAN is a 3G network such as UTRAN, the access network device is an RNC, and the mobility management device is an SGSN; when the RAN is a 2G network such as GSM/EDGE Radio Access Network (GERAN), the access network device is a BSC, and the mobility management device is an SGSN.

The service request processing method provided in this embodiment may be triggered proactively by the UE, namely, the UE sends a service request to the mobility management device through the access network device proactively, thus setting up an air interface-side signaling connection and bearer; or, the service request processing method is triggered by the UE passively according to the network-side paging. That is, after the mobility management device receives the downlink data notification message sent by the first SGW, the access network device puts paging through to the corresponding UE, which triggers the UE to send a service request to the mobility management device passively through the access network device. The paging from the network to the UE triggers the UE to send a service request passively to set up an air interface-side signaling connection and bearer.

In this embodiment, the mobility management device judges whether a user-plane connection exists between the access network device and the currently selected first SGW according to a preset policy after the access network device receives a service request sent by the UE proactively or passively; after determining that no user-plane connection exists between the access network device and the first SGW, the mobility management device returns a Service Reject message; the Service Reject message instructs the UE to initiate a TAU procedure to select a second SGW which has a user-plane connection with the access network device, and set up a UE service bearer on the second SGW, thus ensuring normal implementation of the uplink and downlink services requested by the UE.

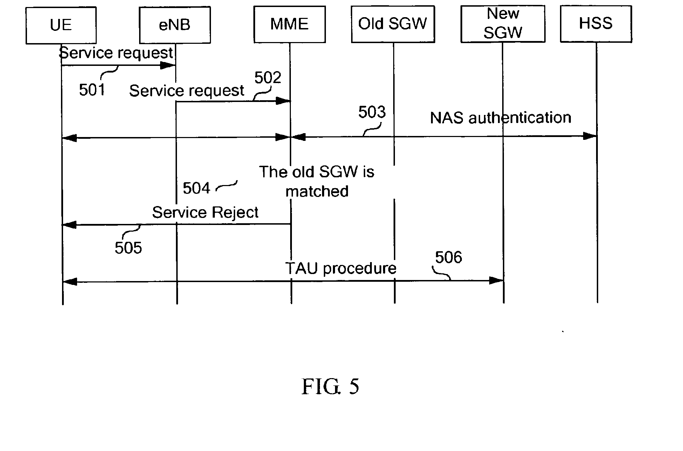

The service request processing method provided in the fifth embodiment of the present invention is applicable to a scenario of accessing the EPC through an E-UTRAN, in which the UE sends a service request to the MME proactively through an eNB. FIG. 5 is a flowchart of a service request processing method provided in the fifth embodiment of the present invention. As shown in FIG. 5, the method in this embodiment includes the following steps:
Step 501: The UE sends a Service Request that carries the identifier of the UE to the eNB.
Step 502: The eNB receives the Service Request and forwards it to the MME.
Step 503: The MME interacts with the UE and an HSS to perform NAS authentication for the UE.

This step is optional, and is performed only if NAS authentication is required.

Step 504: The MME receives the service request, and finds the preselected first SGW (old SGW) which matches the identifier of the UE and corresponds to the UE.

Step 505: The MME determines that no user-plane connection exists between the eNB and the old SGW, namely, the old SGW is not able to serve the UE any longer. Therefore, the MME returns a Service Reject message to the UE as an instruction of initiating a TAU procedure and recovering the radio bearer on the air interface side. The Service Reject message carries a cause value.

In this step, the MME may judge whether the old SGW can go on serving the UE according to the TAI of the current TA of the UE in one of the following three methods:
Method A: The MME searches the Domain Name System (DNS) according to the TAI of the current TA of the UE to obtain the identifiers of all SGWs corresponding to the TA. The MME checks whether the obtained identifiers include the identifier of the old SGW. The obtained identifiers of all SGWs that can serve the UE in the current TA of the UE may be a list of addresses of all SGWs, or a list of names of all SGWs. If any of such identifiers is the same as the identifier of the old SGW, it indicates that the old SGW can go on serving the UE; otherwise, it indicates that the old SGW is not able to serve the UE any longer.
Method B: The MME searches the DNS according to the identifier of the old SGW to obtain identifiers of all TAs corresponding to the old SGW, and stores the obtained identifiers of all TAs. The MME checks whether the pre-stored identifiers of all TAs corresponding to the old SGW include the identifier of the current TA of the UE. The obtained and stored identifiers of all TAs that can be served by the old SGW may be a list of all TAIs. If any of such identifiers is the same as the identifier of the current TA of the UE, it indicates that the old SGW can go on serving the UE; otherwise, it indicates that the old SGW is not able to serve the UE any longer.
Method C: The MME searches the DNS according to the identifier of the old SGW to obtain identifiers of all TAs corresponding to the old SGW. The MME checks whether the obtained identifiers of all TAs corresponding to the old SGW include the identifier of the current TA of the UE. The obtained identifiers of all TAs that can be served by the old SGW may be a list of all TAIs. If any of such identifiers is the same as the identifier of the current TA of the UE, it indicates that the old SGW can go on serving the UE; otherwise, it indicates that the old SGW is not able to serve the UE any longer.

Further, in this step, the MME may judge whether the old SGW can go on serving the UE according to the identifier of the eNB currently connected to the UE in one of the following three methods:
Method A': The MME searches the DNS according to the identifier of the eNB to obtain identifiers of all SGWs corresponding to this eNB. The MME checks whether the obtained identifiers of all SGWs include the identifier of the old SGW The obtained identifiers of all SGWs that can serve the eNB may be a list of addresses of all SGWs, or a list of names of all SGWs. If any of such identifiers is the same as the identifier of the old SGW, it indicates that the old SGW can go on serving the UE; otherwise, it indicates that the old SGW is not able to serve the UE any longer.
Method B': The MME searches the DNS according to the identifier of the old SGW to obtain identifiers of all eNB's corresponding to the old SGW, and stores the obtained identifiers of all eNB's. The MME checks whether the pre-stored identifiers of all eNB's corresponding to the old SGW include the identifier of the eNB currently connected to the UE. The obtained and stored identifiers of all eNB's that can be served by the old SGW may be a list of identifiers of all eNB's. If any of such identifiers is the same as the identifier of the eNB currently connected to the UE, it indicates that the old SGW can go on serving the UE; otherwise, it indicates that the old SGW is not able to serve the UE any longer.
Method C': The MME searches the DNS according to the identifier of the old SGW to obtain identifiers of all eNB's corresponding to the old SGW The MME checks whether the obtained identifiers of all eNB's corresponding to the old SGW include the identifier of the eNB currently connected to the UE. The obtained identifiers of all eNB's that can be served by the old SGW may be a list of identifiers of all eNB's. If any of such identifiers is the same as the identifier of the eNB currently connected to the UE, it indicates that the old SGW can go on serving the UE; otherwise, it indicates that the old SGW is not able to serve the UE any longer.

Step 506: The UE initiates a TAU procedure, and the MME selects a second SGW which has a user-plane connection with the access network device, and sets up a UE service bearer on the new second SGW

In this embodiment, through the eNB, the MME receives the service request sent by the UE proactively, and then judges whether a user-plane connection exists between the eNB and the currently SGW according to a preset policy; after determining that no user-plane connection exists between the eNB and the currently SGW, the MME returns a Service Reject message; the Service Reject message instructs the UE to initiate a TAU procedure to select a second SGW which has a user-plane connection with the access network device, and set up a UE service bearer on the second SGW, thus ensuring normal implementation of the uplink and downlink services requested by the UE.

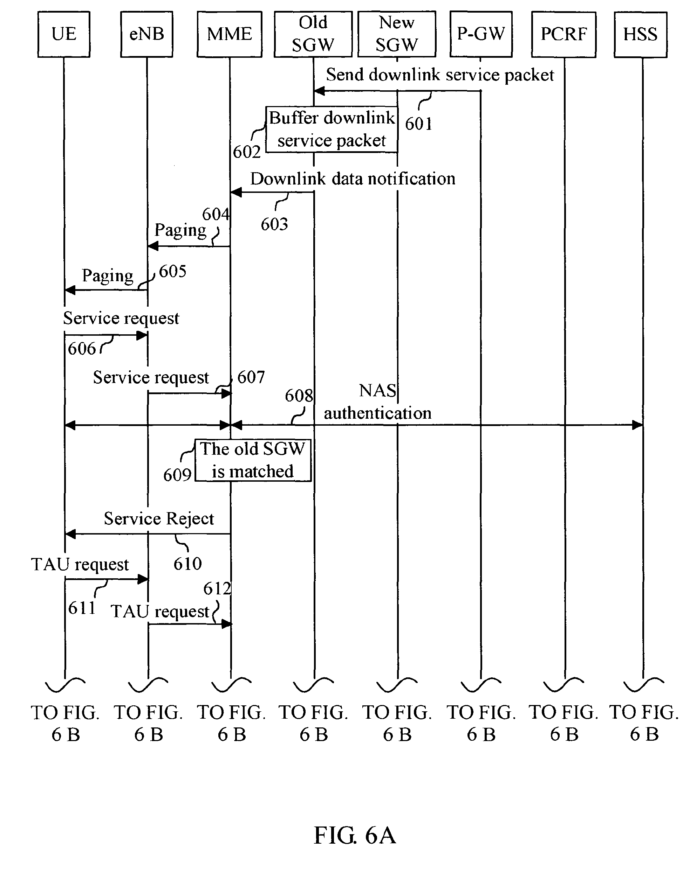

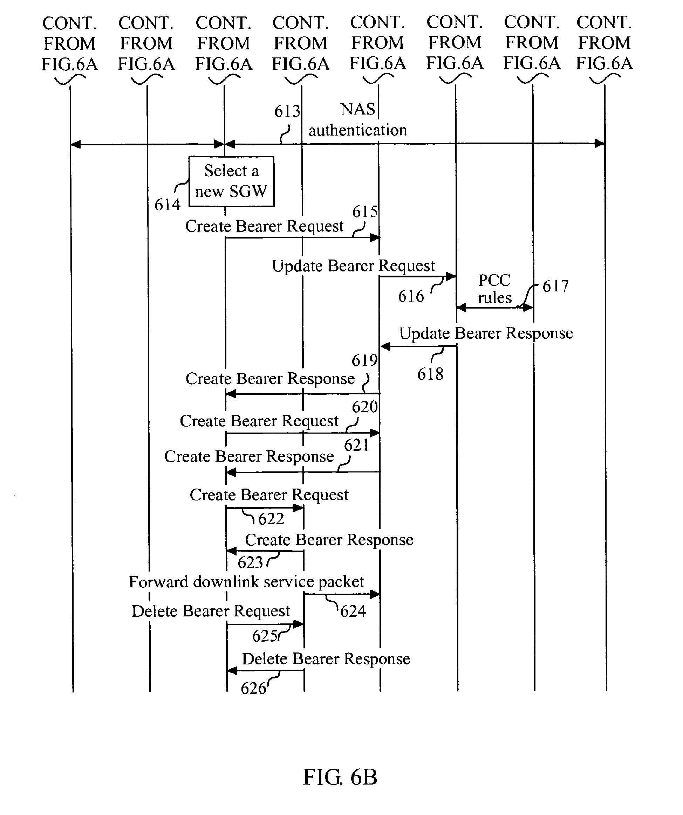

The service request processing method provided in the sixth embodiment of the present invention is applicable to a scenario of accessing the EPC through an E-UTRAN, in which the idle UE sends a service request to the MME passively through the eNB as triggered by the network, namely, after being paged by the network through the eNB. FIG. 6 is a flowchart of a service request processing method provided in the sixth embodiment of the present invention. As shown in FIG. 6, the method in this embodiment includes the following steps:
Step 601: The PGW sends a downlink service packet to the old SGW.
Step 602: The old SGW receives the downlink service packet, but obtains no information about the downlink tunnel corresponding to the downlink service packet. Therefore, the old SGW buffers the downlink service packet.
Step 603: The old SGW sends a downlink data notification message to the MME.
Step 604: The MME receives the downlink data notification message, and sends a Paging message to the eNB.
Step 605: The eNB receives the Paging message and forwards it to the corresponding idle UE.

Now, the idle UE is triggered to send a service request to the MME passively through the eNB.

Step 606: The UE sends a Service Request that carries the identifier of the UE to the eNB.

Step 607: The eNB receives the Service Request and forwards it to the MME.

Step 608: The MME interacts with the UE and the HSS, and performs NAS authentication for the UE.

This step is optional, and is performed only if NAS authentication is required.

Step 609: The MME receives the service request, and finds the preselected first SGW (old SGW) which matches the identifier of the UE and corresponds to the UE.

Step 610: The MME determines that no user-plane connection exists between the eNB and the old SGW, namely, the old SGW is not able to serve the UE any longer. Therefore, the MME returns a Service Reject message to the UE as an instruction of initiating a TAU procedure and recovering the radio bearer on the air interface side. The Service Reject message carries a cause value.

In this step, the MME may judge whether the old SGW can go on serving the UE according to the TAI of the current TA of the UE. The judgment method is the same as that detailed in the previous embodiment.

Step 611: The UE sends a TAU Request that carries the identifier of the UE to the eNB. Step 612: The eNB receives the TAU Request and forwards it to the MME.

Step 613: The MME interacts with the UE and the HSS, and performs NAS authentication for the UE.

This step is optional, and is performed only if NAS authentication is required.

Step 614: The MME receives the TAU Request and selects a second SGW (new SGW) which has a user-plane connection with the eNB.

Step 615: The MME sends a Create Bearer Request to the new SGW, and creates a bearer context of the user on the new SGW.

Step 616: The new SGW receives the Create Bearer Request message, and sends an Update Bearer Request message to the PGW, where the Update Bearer Request message carries the address of the new SGW and the TEID allocated by the new SGW.

Step 617: The PGW receives the Update Bearer Request message, and the PCEF in the PGW interacts with the PCRF to trigger processing of PCC rules.

The PGW receives the Update Bearer Request message. Now, the tunnel bearer between the new SGW and the PGW is set up, and the PGW can send downlink service packets to the UE through the new SGW

This step of interaction is optional and is performed only if the dynamic PCC architecture is configured. When this step is performed, the PCEF reports the current access mode to the PCRF, namely, initiates an IP-CAN session modification procedure.

Step 618: The PGW receives the Update Bearer Request message, and returns an Update Bearer Response message to the SGW

Step 619: The new SGW receives the Update Bearer Response message, and forwards the Create Bearer Response message to the MME.

Step 620: The MME receives the Create Bearer Response message, and returns a Create Bearer Request message to the new SGW

Step 621: The new SGW receives the Create Bearer Request message, and returns a Create Bearer Response message to the MME, where the message carries the destination address allocated by the new SGW for data forwarding and the TEID allocated by the new SGW

Step 622: The MME receives the Create Bearer Response message, and sends a Create Bearer Request message to the old SGW The Create Bearer Response message carries the destination address allocated by the new SGW for data forwarding and the TEID allocated by the new SGW

The MME interacts with the old S-GW to construct a data forwarding channel between the new SGW and the old SGW, notifies the address allocated by the new SGW for data forwarding and the TEID to the old SGW, and instructs the old SGW to start data forwarding.

Step 623: The old SGW receives the Create Bearer Request message, and returns a Create Bearer Response message to the MME, indicating that the old SGW has received the information about the tunnel and is ready for forwarding data to the new SGW

Now, the data forwarding tunnel between the old SGW and the new SGW is set up, and the old SGW starts forwarding the buffered downlink service packets to the new SGW

Step 624: The old SGW forwards the buffered downlink service packets to the new SGW.

Step 625: The MME sends a Delete Bearer Request message to the old SGW.

Step 626: The old SGW receives the Delete Bearer Request message, deletes the bearer context on the old SGW, and returns a Delete Bearer Response message to the MME to confirm deletion of the bearer context.

Further, step 615 and step 619 may be combined with step 620 and step 621.

The idle UE in this embodiment sends a service request to the MME passively through the eNB as triggered by the downlink data sent by the network, namely, after being paged by the network through the eNB. Further, the idle UE in this embodiment may also send a service request to the MME passively through the eNB as triggered by the downlink signaling sent by the network, namely, after being paged by the network through the eNB. In this case, the network has no downlink data for forwarding.

Further, the UE in this embodiment may be a UE based on an ISR mechanism. The ISR mechanism complies with the following principles:
The UE is registered onto the MME and SGSN respectively; the MME allocates a TA list to the UE; and the SGSN stores the Routing Area Identifier (RAI) of the routing area in which the UE is currently located. No TAU procedure or RAU procedure will be initiated only if the idle UE moves within the area corresponding to this TA list and the area corresponding to the RAI.

The MME and the SGSN are registered onto the HSS, and the HSS maintains the dual-PS domain network registration.

The SGSN and the MME need to notify the UE whether to use the ISR function.

If the 2G or 3G uses the ISR function, the idle user plane is terminated at the SGW.

The use of the ISR function on the UE needs to be notified to the SGW.

Further, in the fifth embodiment and the sixth embodiment, after the old SGW deletes the carried context, the old SGW may trigger the SGSN to delete the bearer context on the SGSN. More specifically, the old SGW judges whether the ISR mechanism is enabled on the UE; if the ISR mechanism is enabled on the UE, the old SGW triggers the SGSN to delete the bearer context on the SGSN. The fifth embodiment and the sixth embodiment of the present invention may further include:
The MME sends a TAU Accept message to the UE; if the ISR mechanism is deactivated, this message may carry a deactivation identifier indicating that the ISR mechanism is deactivated.

The UE receives the TAU Accept message, and returns a TAU Complete message to the MME.

The idle UE in this embodiment sends a service request to the MME passively through the eNB as triggered by the downlink data sent by the network, namely, after being paged by the network through the eNB. Further, the idle UE in this embodiment may also send a service request to the MME passively through the eNB as triggered by the downlink signaling sent by the network, namely, after being paged by the network through the eNB. In this case, the network has no downlink data for forwarding.

Alternatively, the service request processing method provided in this embodiment is also applicable to other scenarios in which the UE accesses the EPC through the UTRAN or GERAN. In such scenarios, the access network device is an RNC or BSC instead; the mobility management device is an SGSN instead, and the detailed procedure is the same as the procedure described in the fifth embodiment and the sixth embodiment above except that: The SGSN judges whether the old SGW can go on serving the UE according to the RAI of the RA currently covering the UE or the identifier of the RNC/BSC currently connected to the UE. By contrast, in the fifth embodiment and the sixth embodiment, the MME judges whether the old SGW can go on serving the UE according to the TAI of the TA currently covering the UE or the identifier of the eNB currently connected to the UE, the principles of which are still applicable here.

It should be noted that: For ease of description in the method embodiment above, the method is described as a series of operations. Those skilled in the art are aware that the embodiments of the present invention are not limited to the order of operations described herein, and certain steps may occur in different order or occur simultaneously. Meanwhile, those skilled in the art are aware that the embodiments described herein are preferred embodiments, and the involved operations and modules are not mandatory.

In the foregoing embodiments, each embodiment emphasizes a specific aspect, and the part not detailed in one embodiment may be detailed in another embodiment.

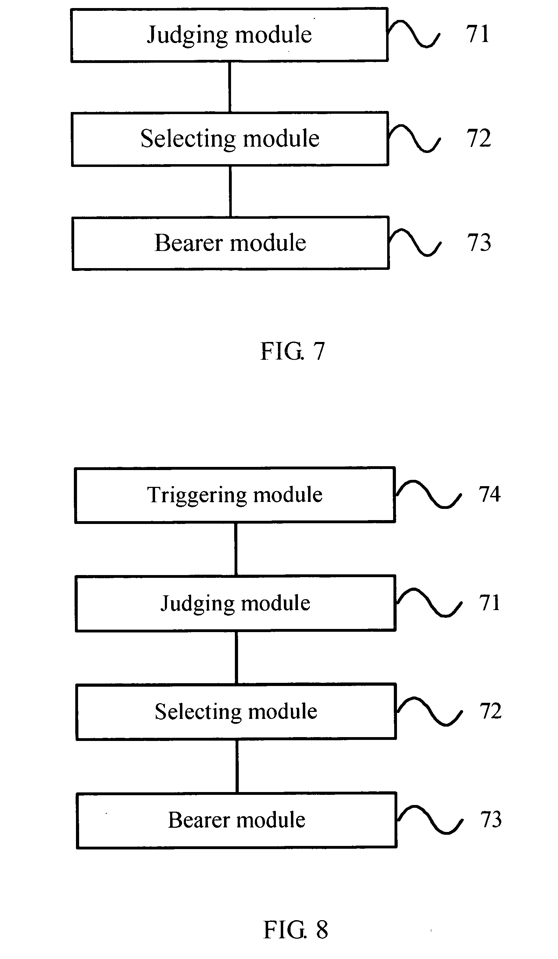

FIG. 7 shows a structure of a service request processing apparatus provided in the seventh embodiment of the present invention. As shown in FIG. 7, the apparatus in this embodiment includes a judging module 71, a selecting module 72, and a bearer module 73. The judging module 71 judges whether a user-plane connection exists between the access network device and the pre-selected first SGW corresponding to the UE after receiving the service request sent by the UE through the access network device. If the judging module 71 determines that no user-plane connection exists between the access network device and the first SGW, the selecting module 72 select a second SGW which has a user-plane connection with the access network device; and the bearer module 73 sets up a bearer on the second SGW determined by the selecting module 72.

The service request processing apparatus provided in this embodiment may be a mobility management device (MME or SGSN). In this embodiment, the judging module receives the service request sent by the UE through the access network device, and then judges whether a user-plane connection exists between the access network device and the currently selected SGW according to the preset policy. If the judging module determines that no user-plane connection exists, the selecting module selects a new SGW which has a user-plane connection with the access network device, and the bearer module sets up a UE service bearer on the new SGW, thus ensuring normal implementation of uplink and downlink services requested by the UE. In this embodiment, through a service request mechanism initiated by a special UE proactively, the service request processing apparatus provided in this embodiment solves the problem of lacking a user-plane connection between the access network device connected to the UE and the current SGW when the UE initiates a service request procedure proactively, and avoids failure of uplink and downlink services of the UE.

FIG. 8 shows a structure of a service request processing apparatus provided in the eighth embodiment of the present invention. As shown in FIG. 8, compared with the previous embodiment, the apparatus in this embodiment may further include a triggering module 74, which pages the corresponding UE through the access network device according to the downlink data notification message received from the first SGW, with a view to triggering the UE to send a service request message to the judging module 71 through the access network device. After determining that the triggering module receives the downlink data notification message, the bearer module 73 may interact with the first SGW by using the address allocated by the second SGW for data forwarding and the allocated TEID, where the address and the TEID are returned by the second SGW; and set up a unidirectional tunnel bearer from the first SGW to the second SGW, through which the first SGW can send the buffered downlink data to the second SGW. In this embodiment, through a service request mechanism initiated by a special UE passively, the service request processing apparatus provided in this embodiment solves the problem of lacking a user-plane connection between the access network device connected to the UE and the current SGW when the UE initiates a service request procedure passively, and avoids failure of uplink and downlink services of the UE.

Further, the apparatus in the fourth embodiment and the apparatus in the fifth embodiment may further include a deleting module (not illustrated in FIG. 8), which deletes the bearer context on the first SGW after the bearer module 73 creates the bearer on the second SGW.

Further, the selecting module 72 in the fourth embodiment and the fifth embodiment may be further adapted to return a Service Reject message if the judging module determines that no user-plane connection exists between the access network device and the first SGW, where the Service Reject message instructs the UE to initiate a location area update procedure.

A system for processing a service request is provided in the sixth embodiment of the present invention. The system may include an access network device, an SGW, and a mobility management device. The mobility management device is connected with the UE through the access network gateway, and is connected with the PGW through the SGW The SGW may be supposed to include the first SGW and the second SGW. The first SGW is a preselected SGW corresponding to the UE connected to the access network device; and the second SGW is an SGW which has a user-plane connection to the access network device. The mobility management device determines that no user-plane connection exists between the access network device and the first SGW after receiving the service request sent by the UE through the access network device, and then sets up a bearer on the second SGW.

The mobility management device in this embodiment may be any service request processing apparatus provided in the seventh embodiment and the eighth embodiment of the present invention.

Persons of ordinary skill in the art should understand that all or part of the steps of the method based on the embodiments of the present invention may be implemented by a program instructing relevant hardware. The program may be stored in a computer readable storage medium. When the program runs, the steps of the method based on the embodiments of the present invention are performed. The storage medium may be any medium that is capable of storing program codes, such as ROM, RAM, magnetic disk, or CD-ROM.

Finally, it should be noted that the above embodiments are merely provided for describing the technical solutions of the present invention, but not intended to limit the present invention.

## Claims

1. A service request processing method, comprising:
receiving (101), by a mobility management device, a service request sent by User Equipment, UE, through an access network device;
determining (102), by the mobility management device, whether a user-plane connection exists between the access network device and a first Serving Gateway, SGW, wherein the first SGW is a preselected SGW corresponding to the UE;
selecting (103), by the mobility management device, a second SGW, if determining that no user-plane connection exists between the access network device and the first SGW, wherein the second SGW has a user-plane connection with the access network device; and
setting up (105), by the mobility management device, a bearer on the second SGW.

2. The method according to claim 1, wherein
determining (102) whether a user-plane connection exists between the access network device and the first SGW comprises any one of the following methods:
A: obtaining identifiers of all SGWs corresponding to a current location area of the UE according to an identifier of the current location area; and
determining that no user-plane connection exists between the access network device and the first SGW if no identifier in the obtained identifiers of all SGWs matches an identifier of the first SGW;
B: determining that no user-plane connection exists between the access network device and the first SGW if no identifier in pre-stored identifiers of location areas corresponding to the first SGW matches an identifier of a current location area of the UE;
C: obtaining identifiers of all location areas corresponding to the first SGW according to an identifier of the first SGW; and
determining that no user-plane connection exists between the access network device and the first SGW if no identifier in the obtained identifiers of the location areas matches an identifier of a current location area of the UE.

3. The method according to claim 2, wherein
the location area of the UE comprises tracking areas and routing areas of the UE.

4. The method according to claim 1, wherein
determining (102) whether a user-plane connection exists between the access network device and the first SGW comprises any one of the following methods:
A': obtaining identifiers of all SGWs corresponding to the access network device according to an identifier of the access network device; and determining that no user-plane connection exists between the access network device and the first SGW if no identifier in the obtained identifiers of SGWs matches an identifier of the first SGW;
B': determining that no user-plane connection exists between the access network device and the first SGW if no identifier in pre-stored identifiers of access network devices corresponding to the first SGW matches an identifier of the access network device;
C': obtaining identifiers of all access network devices corresponding to the first SGW according to an identifier of the first SGW; and
determining that no user-plane connection exists between the access network device and the first SGW if no identifier in the obtained identifiers of access network devices matches an identifier of the access network device.

5. The method according to claim 2 or claim 4, wherein selecting (104) the second SGW comprises: selecting one of the obtained identifiers of all SGWs, and using an SGW corresponding to the selected identifier as the second SGW.

6. The method according to claim 1, wherein before selecting (405) the second SGW, the method further comprises:
returning (404) a Service Reject message that carries a cause value to instruct the UE to initiate a location area update procedure, and selecting the second SGW in the location area update procedure.

7. The method according to claim 1 or claim 6, wherein the setting up (406) of the bearer on the second SGW comprises:
setting up a tunnel bearer between the access network device and the second SGW;
setting up a radio bearer between the UE and the access network device; and
setting up a tunnel bearer between the second SGW and a Packet Data Network Gateway, PGW.

8. The method according to claim 7, wherein
before receiving (401) the service request sent by the UE through the access network device, the method further comprises:
receiving a downlink data notification message sent by the first SGW; and
paging the UE through the access network device so as to trigger the UE to send the service request through the access network device.

9. The method according to claim 8, wherein
after setting up the tunnel bearer between the access network device and the second SGW, the method further comprises:
using an address of the second SGW and an allocated Tunnel Endpoint Identifier, TEID, to interact with the first SGW, and setting up a unidirectional tunnel bearer from the first SGW to the second SGW, wherein the address is returned by the second SGW.

10. The method according to claim 9, wherein
after setting up the tunnel bearer between the second SGW and the PGW, the method further comprises:
deleting a bearer context on the first SGW.

11. The method according to claim 10, wherein
after deleting the bearer context on the first SGW, the method further comprises:
determining, by the first SGW, that an Idle mode Signaling Reduction, ISR, mechanism is enabled, and triggering a peer network involved by the ISR mechanism to delete a bearer context on a mobility management device in the peer network.

12. A mobility management device, comprising:
a judging module (71), adapted to receive a service request sent by User Equipment, UE, through an access network device and judge whether a user-plane connection exists between the access network device and a first Serving Gateway, SGW, wherein the first SGW is a preselected SGW corresponding to the UE;
a selecting module (72), adapted to select a second SGW if the judging module determines that no user-plane connection exists between the access network device and the first SGW, wherein the second SGW has a user-plane connection with the access network device; and
a bearer module (73), adapted to set up a bearer on the second SGW.

13. The mobility management device according to claim 12, wherein:
the selecting module (72) is further adapted to return a Service Reject message if the judging module determines that no user-plane connection exists between the access network device and the first SGW, wherein the Service Reject message carries a cause value and instructs the UE to initiate a location area update procedure.

14. The mobility management device according to claim 12 or claim 13, further comprising:
a triggering module (74), adapted to page the UE through the access network device according to a downlink data notification message received from the first SGW, with a view to triggering the UE to send the service request to the judging module through the access network device.

15. The mobility management device according to claim 14, wherein
the bearer module (73) is further adapted to use an address of the second SGW and an allocated Tunnel Endpoint Identifier, TEID, to interact with the first SGW, and set up a unidirectional tunnel bearer from the first SGW to the second SGW, wherein the address is returned by the second SGW.

16. The mobility management device according to claim 15, further comprising:
a deleting module, adapted to delete a bearer context on the first SGW.

17. A service request processing system, wherein
the system comprises: an access network device, a mobility management device, and a Serving Gateway, SGW, which comprises a first SGW and a second SGW;
the first SGW is a preselected SGW corresponding to User Equipment, UE, connected to the access network device;
the second SGW is an SGW which has a user-plane connection with the access network device; and
the mobility management device is adapted to receive a service request sent by User Equipment, UE, through an access network device, judge whether a user-plane connection exists between the access network device and the first SGW and set up a bearer on the second SGW if determining that no user-plane connection exists between the access network device and the first SGW.

## Patentansprüche

1. Dienstanforderungs-Verarbeitungsverfahren, das Folgendes umfasst:
Empfangen (101) durch eine Mobilitätsmanagementvorrichtung einer Dienstanforderung, die von einem Anwendergerät, UE, über eine Zugriffsnetzvorrichtung gesendet wird;
Bestimmen (102) durch die Mobilitätsmanagementvorrichtung, ob eine Verbindung auf Anwenderebene zwischen der Zugriffsnetzvorrichtung und einem ersten dienenden Gateway, SGW, vorhanden ist, wobei das erste SGW ein im Voraus gewähltes SGW ist, das dem UE entspricht;
Auswählen (103) durch die Mobilitätsmanagementvorrichtung eines zweiten SGW, falls bestimmt wird, dass zwischen der Zugriffsnetzvorrichtung und dem ersten SGW keine Verbindung auf Anwenderebene vorhanden ist, wobei das zweite SGW eine Verbindung auf Anwenderebene mit der Zugriffsnetzvorrichtung hat; und
Einrichten (105) durch die Mobilitätsmanagementvorrichtung eines Trägers auf dem zweiten SGW.

2. Verfahren nach Anspruch 1, wobei
das Bestimmen (102), ob zwischen der Zugriffsnetzvorrichtung und dem ersten SGW eine Verbindung auf Anwenderebene vorhanden ist, eines der folgenden Verfahren umfasst:
A: Erhalten von Kennungen sämtlicher SGW, die einem aktuellen Ortsbereich des UE entsprechen, in Übereinstimmung mit einer Kennung des momentanen Ortsbereichs; und
Bestimmen, dass zwischen der Zugriffsnetzvorrichtung und dem ersten SGW keine Verbindung auf Anwenderebene vorhanden ist, falls unter den erhaltenen Kennungen sämtlicher SGW keine Kennung mit einer Kennung des ersten SGW übereinstimmt;
B: Bestimmen, dass zwischen der Zugriffsnetzvorrichtung und dem ersten SGW keine Verbindung auf Anwenderebene vorhanden ist, falls keine Kennung unter im Voraus gespeicherten Kennungen von Ortsbereichen, die dem ersten SGW entsprechen, mit einer Kennung eines aktuellen Ortsbereichs des UE übereinstimmt;
C: Erhalten von Kennungen sämtlicher Ortsbereiche, die dem ersten SGW entsprechen, in Übereinstimmung mit einer Kennung des ersten SGW; und
Bestimmen, dass zwischen der Zugriffsnetzvorrichtung und dem ersten SGW keine Verbindung auf Anwenderebene vorhanden ist, falls keine Kennung unter den erhaltenen Kennungen der Ortsbereiche mit einer Kennung eines aktuellen Ortsbereichs des UE übereinstimmt.

3. Verfahren nach Anspruch 2, wobei
der Ortsbereich des UE Verfolgungsbereiche und Lenkungsbereiche des UE umfasst.

4. Verfahren nach Anspruch 1, wobei
das Bestimmen (102), ob zwischen der Zugriffsnetzvorrichtung und dem ersten SGW eine Verbindung auf Anwenderebene vorhanden ist, eines der folgenden Verfahren umfasst:
A': Erhalten von Kennungen sämtlicher SGW, die der Zugriffsnetzvorrichtung entsprechen, in Übereinstimmung mit einer Kennung der Zugriffsnetzvorrichtung; und Bestimmen, dass zwischen der Zugriffsnetzvorrichtung und dem ersten SGW keine Verbindung auf Anwenderebene vorhanden ist, falls keine Kennung unter den erhaltenen Kennungen der SGW mit einer Kennung des ersten SGW übereinstimmt;
B': Bestimmen, dass zwischen der Zugriffsnetzvorrichtung und dem ersten SGW keine Verbindung auf Anwenderebene vorhanden ist, falls keine Kennung unter im Voraus gespeicherten Kennungen von Zugriffsnetzvorrichtungen, die dem ersten SGW entsprechen, mit einer Kennung der Zugriffsnetzvorrichtung übereinstimmt;
C': Erhalten von Kennungen sämtlicher Zugriffsnetzvorrichtungen, die dem ersten SGW entsprechen, in Übereinstimmung mit einer Kennung des ersten SGW; und
Bestimmen, dass zwischen der Zugriffsnetzvorrichtung und dem ersten SGW keine Verbindung auf Anwenderebene vorhanden ist, falls keine Kennung unter den erhaltenen Kennungen von Zugriffsnetzvorrichtungen mit einer Kennung der Zugriffsnetzvorrichtung übereinstimmt.

5. Verfahren nach Anspruch 2 oder Anspruch 4, wobei das Auswählen (104) des zweiten SGW Folgendes umfasst: Auswählen einer der erhaltenen Kennungen sämtlicher SGW und Verwenden eines SGW, das der ausgewählten Kennung entspricht, als das zweite SGW.

6. Verfahren nach Anspruch 1, wobei das Verfahren vor dem Auswählen (405) des zweiten SGW ferner Folgendes umfasst:
Zurückleiten (404) einer Dienstabweisungsnachricht, die einen Ursachenwert führt, um das UE anzuweisen, eine Ortsbereichsaktualisierungsprozedur zu initialisieren, und Auswählen des zweiten SGW in der Ortsbereichsaktualisierungsprozedur.

7. Verfahren nach Anspruch 1 oder Anspruch 6, wobei das Einrichten (406) des Trägers in dem zweiten SGW Folgendes umfasst:
Einrichten eines Tunnelträgers zwischen der Zugriffsnetzvorrichtung und dem zweiten SGW;
Einrichten eines Funkträgers zwischen dem UE und der Zugriffsnetzvorrichtung; und
Einrichten eines Tunnelträgers zwischen dem zweiten SGW und einem Paketdatennetz-Gateway, PGW.

8. Verfahren nach Anspruch 7, wobei
das Verfahren vor dem Empfangen (401) der von dem UE gesendeten Dienstanforderung über die Zugriffsnetzvorrichtung ferner Folgendes umfasst:
Empfangen einer Abwärtsstreckendaten-Meldenachricht, die von dem ersten SGW gesendet wird; und
Funkrufen des UE über die Zugriffsnetzvorrichtung, um auszulösen, dass das UE die Dienstanforderung über die Zugriffsnetzvorrichtung sendet.

9. Verfahren nach Anspruch 8, wobei
das Verfahren nach dem Einrichten des Tunnelträgers zwischen der Zugriffsnetzvorrichtung und dem zweiten SGW ferner Folgendes umfasst:
Verwenden einer Adresse des zweiten SGW und einer zugewiesenen Tunnelendpunkt-Kennung, TEID, um mit dem ersten SGW in Wechselwirkung zu treten, und Einrichten eines unidirektionalen Tunnelträgers von dem ersten SGW zu dem zweiten SGW, wobei die Adresse durch das zweite SGW zurückgeleitet wird.

10. Verfahren nach Anspruch 9, wobei
das Verfahren nach dem Einrichten des Tunnelträgers zwischen dem zweiten SGW und dem PGW ferner Folgendes umfasst:
Löschen eines Trägerkontexts in dem ersten SGW.

11. Verfahren nach Anspruch 10, wobei
das Verfahren nach dem Löschen des Trägerkontexts in dem ersten SGW ferner Folgendes umfasst:
Bestimmen durch das erste SGW, dass ein Leerlaufmodus-Signalgebungsreduzierungsmechanismus, ISR-Mechanismus, freigegeben ist, und
Auslösen, dass ein Peer-Netz, das der ISR-Mechanismus enthält, einen Trägerkontext in einer Mobilitätsmanagementvorrichtung in dem Peer-Netz löscht.

12. Mobilitätsmanagementvorrichtung, die Folgendes umfasst:
ein Beurteilungsmodul (71), das dafür ausgelegt ist, eine von einem Anwendergerät, UE, über eine Zugriffsnetzvorrichtung gesendete Dienstanforderung zu empfangen und zu beurteilen, ob zwischen der Zugriffsnetzvorrichtung und einem ersten dienenden Gateway, SGW, eine Verbindung auf Anwenderebene vorhanden ist, wobei das erste SGW ein im Voraus gewähltes SGW ist, das dem UE entspricht;
ein Auswahlmodul (72), das dafür ausgelegt ist, ein zweites SGW zu wählen, falls das Beurteilungsmodul bestimmt, dass zwischen der Zugriffsnetzvorrichtung und dem ersten SGW keine Verbindung auf Anwenderebene vorhanden ist, wobei das zweite SGW eine Verbindung auf Anwenderebene mit der Zugriffsnetzvorrichtung hat; und
ein Trägermodul (73), das dafür ausgelegt ist, einen Träger in dem zweiten SGW einzurichten.

13. Mobilitätsmanagementvorrichtung nach Anspruch 12, wobei:
das Auswahlmodul (72) ferner dafür ausgelegt ist, eine Dienstabweisungsnachricht zurückzuleiten, falls das Beurteilungsmodul bestimmt, dass zwischen der Zugriffsnetzvorrichtung und dem ersten SGW keine Verbindung auf Anwenderebene vorhanden ist, wobei die Dienstzurückweisungsnachricht einen Ursachenwert führt und das UE anweist, eine Ortsbereichsaktualisierungsprozedur zu initialisieren.

14. Mobilitätsmanagementvorrichtung nach Anspruch 12 oder Anspruch 13, die ferner Folgendes umfasst:
ein Auslösemodul (74), das dafür ausgelegt ist, einen Funkruf zu dem UE über die Zugriffsnetzvorrichtung in Übereinstimmung mit einer Abwärtsstreckendaten-Meldenachricht, die von dem ersten SGW empfangen wird, auszuführen, um auszulösen, dass das UE die Dienstanforderung zu dem Beurteilungsmodul über die Zugriffsnetzvorrichtung sendet.

15. Mobilitätsmanagementvorrichtung nach Anspruch 14, wobei
das Trägermodul (73) ferner dafür ausgelegt ist, eine Adresse des zweiten SGW und eine zugewiesene Tunnelendpunktkennung, TEID, zu verwenden, um mit dem ersten SGW in Wechselwirkung zu treten, und einen unidirektionalen Tunnelträger von dem ersten SGW zu dem zweiten SGW einzurichten, wobei die Adresse durch das zweite SGW zurückgeleitet wird.

16. Mobilitätsmanagementvorrichtung nach Anspruch 15, die ferner Folgendes umfasst:
ein Löschmodul, das dafür ausgelegt ist, einen Trägerkontext in dem ersten SGW zu löschen.

17. Dienstanforderungs-Verarbeitungssystem, wobei
das System Folgendes umfasst: eine Zugriffsnetzvorrichtung, eine Mobilitätsmanagementvorrichtung und ein dienendes Gateway, SGW, das ein erstes SGW und ein zweites SGW umfasst;
das erste SGW ein im Voraus gewähltes SGW ist, das einem Anwendergerät, UE, entspricht, das mit der Zugriffsnetzvorrichtung verbunden ist;
das zweite SGW ein SGW ist, das eine Verbindung auf Anwenderebene mit der Zugriffsnetzvorrichtung hat; und
die Mobilitätsmanagementvorrichtung dafür ausgelegt ist, eine von dem Anwendergerät, UE, über die Zugriffsnetzvorrichtung gesendete Dienstanforderung zu empfangen, zu beurteilen, ob zwischen der Zugriffsnetzvorrichtung und dem ersten SGW eine Verbindung auf Anwenderebene vorhanden ist, und einen Träger in dem zweiten SGW einzurichten, falls bestimmt wird, dass zwischen der Zugriffsnetzvorrichtung und dem ersten SGW keine Verbindung auf Anwenderebene vorhanden ist.

## Revendications

1. Procédé de traitement de demande de service, comprenant:
la réception (101), par un dispositif de gestion de la mobilité, d'une demande de service envoyée par un équipement utilisateur, UE (User Equipment), par l'intermédiaire d'un dispositif de réseau d'accès ;
la détermination (102), par le dispositif de gestion de la mobilité, du fait de savoir s'il existe une connexion du plan utilisateur entre le dispositif de réseau d'accès et une première passerelle de service, SGW (Serving Gateway), dans lequel la première SGW est une SGW présélectionnée correspondant à l'UE ;
la sélection (103), par le dispositif de gestion de la mobilité, d'une seconde SGW, s'il est déterminé qu'il n'existe aucune connexion du plan utilisateur entre le dispositif de réseau d'accès et la première SGW, la seconde SGW disposant d'une connexion du plan utilisateur au dispositif de réseau d'accès ; et
l'établissement (105), par le dispositif de gestion de la mobilité, d'un support sur la seconde SGW.

2. Procédé selon la revendication 1, dans lequel
la détermination (102) du fait de savoir si une connexion du plan utilisateur entre le dispositif de réseau d'accès et la première SGW comprend l'un quelconque des procédés suivants :
A : l'obtention d'identifiants de toutes les SGW correspondant à une zone de localisation courante de l'UE conformément à un identifiant de la zone de localisation courante ; et
la détermination du fait qu'il n'existe aucune connexion du plan utilisateur entre le dispositif de réseau d'accès et la première SGW si aucun identifiant contenu dans les identifiants obtenus de toutes les SGW ne correspond à un identifiant de la première SGW;
B : la détermination du fait qu'il n'existe aucune connexion du plan utilisateur entre le dispositif de réseau d'accès et la première SGW si aucun identifiant, parmi des identifiants préalablement stockés de zones de localisation correspondant à la première SGW, ne correspond à un identifiant d'une zone de localisation courante de l'UE ;
C : l'obtention des identifiants de toutes les zones de localisation correspondant à la première SGW conformément à un identifiant de la première SGW ; et
la détermination du fait qu'il n'existe aucune connexion du plan utilisateur entre le dispositif de réseau d'accès et la première SGW si aucun identifiant contenu dans les identifiants obtenus des zones de localisation ne correspond à un identifiant d'une zone de localisation courante de l'UE.

3. Procédé selon la revendication 2, dans lequel
la zone de localisation de l'équipement utilisateur comprend des zones de poursuite et des zones de routage de l'UE.

4. Procédé selon la revendication 1, dans lequel
la détermination (102) du fait de savoir s'il existe une connexion du plan utilisateur entre le dispositif de réseau d'accès et la première SGW comprend l'un quelconque des procédés suivants :
A' : l'obtention d'identifiants de toutes les SGW correspondant au dispositif de réseau d'accès conformément à un identifiant du dispositif de réseau d'accès, et la détermination du fait qu'il n'existe aucune connexion du plan utilisateur entre le dispositif de réseau d'accès et la première SGW si aucun identifiant contenu dans les identifiants obtenus des SGW ne correspond à un identifiant de la première SGW ;
B' : la détermination du fait qu'il n'existe aucune connexion du plan utilisateur entre le dispositif de réseau d'accès et la première SGW si aucun identifiant parmi les identifiants préalablement stockés de dispositifs de réseau d'accès correspondant à la première SGW ne correspond à un identifiant du dispositif de réseau d'accès ;
C' : l'obtention d'identifiants de tous les dispositifs de réseau d'accès correspondant à la première SGW conformément à un identifiant de la première SGW ; et
la détermination du fait qu'il n'existe aucune connexion du plan utilisateur entre le dispositif de réseau d'accès et la première SGW si aucun identifiant contenu dans les identifiants obtenus de dispositifs de réseau d'accès ne correspond à un identifiant du dispositif de réseau d'accès.

5. Procédé selon la revendication 2 ou la revendication 4, dans lequel la sélection (104) de la seconde SGW comprend : la sélection de l'un des identifiants obtenus de toutes les SGW, et l'utilisation d'une SGW correspondant à l'identifiant sélectionné en tant que seconde SGW.

6. Procédé selon la revendication 1, dans lequel, avant de sélectionner (405) la seconde SGW, le procédé comprend en outre :
le renvoi (404) d'un message de rejet de service qui achemine une valeur de cause, pour ordonner à l'UE de lancer une procédure de mise à jour de zone de localisation, et la sélection de la seconde SGW dans la procédure de mise à jour de zone de localisation.

7. Procédé selon la revendication 1 ou la revendication 6, dans lequel l'établissement (406) du support sur la seconde SGW comprend :
l'établissement d'un support de tunnel entre le dispositif de réseau d'accès et la seconde SGW ;
l'établissement d'un support radio entre l'UE et le dispositif de réseau d'accès ; et
l'établissement d'un support de tunnel entre la seconde SGW et une passerelle de réseau de données par paquets, PGW (Packet Data Network Gateway).

8. Procédé selon la revendication 7, dans lequel
avant la réception (401) de la demande de service envoyée par l'UE par l'intermédiaire du dispositif de réseau d'accès, le procédé comprend en outre :
la réception d'un message de notification de données de liaison descendante envoyé par la première SGW ; et
la recherche de l'UE par l'intermédiaire du dispositif de réseau d'accès de manière à déclencher l'envoi par l'UE de la demande de service par l'intermédiaire du dispositif de réseau d'accès.

9. Procédé selon la revendication 8, dans lequel
après l'établissement du support de tunnel entre le dispositif de réseau d'accès et la seconde SGW, le procédé comprend en outre :
l'utilisation d'une adresse de la seconde SGW et d'un identifiant de point d'extrémité de tunnel, TEID (Tunnel Endpoint Identifier), alloué pour interagir avec la première SGW, et l'établissement d'un support de tunnel unidirectionnel de la première SGW à la seconde SGW, l'adresse étant renvoyée par la seconde SGW.

10. Procédé selon la revendication 9, dans lequel
après l'établissement du support de tunnel entre la seconde SGW et la PGW, le procédé comprend en outre :
la suppression d'un contexte de support sur la première SGW.

11. Procédé selon la revendication 10, dans lequel
après la suppression du contexte du support sur la première SGW, le procédé comprend en outre :
la détermination, par la première SGW, du fait qu'un mécanisme de réduction de la signalisation en mode veille, ISR (Idle mode Signaling Reduction), est activé, et le déclenchement de la suppression, par un réseau homologue impliqué par le mécanisme ISR, du contexte de support sur un dispositif de gestion de la mobilité dans le réseau homologue.

12. Dispositif de gestion de la mobilité, comprenant :
un module d'évaluation (71), conçu pour recevoir une demande de service envoyée par un équipement utilisateur, UE, par l'intermédiaire d'un dispositif de réseau d'accès et évaluer s'il existe une connexion du plan utilisateur entre le dispositif de réseau d'accès et une première passerelle de service, SGW, la première SGW étant une SGW présélectionnée correspondant à l'UE ;
un module de sélection (72), conçu pour sélectionner une seconde SGW si le module d'évaluation détermine qu'il n'existe aucune connexion du plan utilisateur entre le dispositif de réseau d'accès et la première SGW, la seconde SGW disposant d'une connexion du plan utilisateur au dispositif de réseau d'accès ; et
un module de support (73), conçu pour établir un support sur la seconde SGW.

13. Dispositif de gestion de la mobilité selon la revendication 12, dans lequel :
le module de sélection (72) est en outre conçu pour renvoyer un message de rejet de service si le module d'évaluation détermine qu'il n'existe aucune connexion du plan utilisateur entre le dispositif de réseau d'accès et la première SGW, le message de rejet de service acheminant une valeur de cause et ordonnant à l'UE de lancer une procédure de mise à jour de zone de localisation.

14. Dispositif de gestion de la mobilité selon la revendication 12 ou la revendication 13, comprenant en outre :
un module de déclenchement (74), conçu pour rechercher l'UE par l'intermédiaire du dispositif de réseau d'accès conformément à un message de notification de données de liaison descendante reçu de la première SGW, en vue de déclencher l'envoi par l'UE de la demande de service au module d'évaluation par l'intermédiaire du dispositif de réseau d'accès.

15. Dispositif de gestion de la mobilité selon la revendication 14, dans lequel le module de support (73) est en outre conçu pour utiliser une adresse de la seconde SGW et un identifiant de point d'extrémité de tunnel, TEID, alloué pour interagir avec la première SGW, et établir un support de tunnel unidirectionnel de la première SGW à la seconde SGW, l'adresse étant renvoyée par la seconde SGW.

16. Dispositif de gestion de la mobilité selon la revendication 15, comprenant en outre :
un module de suppression, conçu pour supprimer un contexte de support sur la première SGW.

17. Système de traitement de demande de service, dans lequel
le système comprend : un dispositif de réseau d'accès, un dispositif de gestion de la mobilité, et une passerelle de service, SGW, qui comprend une première SGW et une seconde SGW ;
la première SGW est une SGW présélectionnée correspondant à un équipement utilisateur, UE, connecté au dispositif de réseau d'accès ;
la seconde SGW est une SGW qui dispose d'une connexion du plan utilisateur au dispositif de réseau d'accès ; et
le dispositif de gestion de la mobilité est conçu pour recevoir une demande de service envoyée par un équipement utilisateur, UE, par l'intermédiaire d'un dispositif de réseau d'accès, évaluer s'il existe une connexion du plan utilisateur entre le dispositif de réseau d'accès et la première SGW et établir un support sur la seconde SGW s'il est déterminé qu'il n'existe aucune connexion de plan d'utilisateur entre le dispositif de réseau d'accès et la première SGW.
